# EUROPEAN PATENT APPLICATION

(11) **EP 4 506 816 A1**
(43) Date of publication of application: **12.02.2025**
(21) Application number: 23851734.6
(22) Date of filing: 04.08.2023
(51) Int. Cl.: G06F 9/48

(54) **RESOURCE MANAGEMENT AND CONTROL METHOD, ELECTRONIC DEVICE, STORAGE MEDIUM, AND PROGRAM PRODUCT**

(30) Priority: 12.08.2022 CN 202210965984
(71) Applicant: Huawei Technologies Co., Ltd., Shenzhen, Guangdong 518129 (CN)
(72) Inventor: MA, Jiajun, Shenzhen, Guangdong 518129 (CN)
(74) Representative: Gill Jennings & Every LLP
(86) International application number: PCT/CN2023/111326
(87) International publication number: WO 2024/032513

(57) **Abstract**

This application discloses a resource management and control method, an electronic device, a storage medium, and a program product, to avoid a case in which a distributed application is cleared in a background in a distributed scenario. The resource management and control method includes: A first electronic device displays an interface of a first application; the first electronic device invokes a second application of an associated second electronic device in response to an operation on the first application, and establishes a first association relationship between the first application and the second application, where the first association relationship includes that the first application is in a foreground running state; the first electronic device updates the first association relationship to a second association relationship when the first application is switched from the foreground running state to a background running state, where the second association relationship includes that the first application is in the background running state; and the first electronic device keeps the first application alive based on the second association relationship.

## Description

This application claims priority to Chinese Patent Application No. 202210965984.1, filed with the China National Intellectual Property Administration on August 12, 2022 and entitled "RESOURCE MANAGEMENT AND CONTROL METHOD, ELECTRONIC DEVICE, STORAGE MEDIUM, AND PROGRAM PRODUCT", which is incorporated herein by reference in its entirety.

### TECHNICAL FIELD

This application relates to the field of electronic technologies, and in particular, to a resource management and control method, an electronic device, a storage medium, and a program product.

### BACKGROUND

With development of communication technologies, interconnection and collaboration between a plurality of electronic devices are widely applied. For example, different devices such as a mobile phone, a tablet, a band, a watch, and a display are deployed in a same distributed network, so that the plurality of electronic devices can be applied in different fields such as distributed education, distributed gaming, distributed computing, distributed office, and distributed fitness. However, in a distributed scenario, currently, there is no related mechanism for managing and controlling an application.

### SUMMARY

In view of the foregoing content, it is necessary to provide a resource management and control method, an electronic device, a storage medium, and a program product, to manage and control an application in a distributed scenario.

According to a first aspect, an embodiment of this application provides a resource management and control method, and the method includes: A first electronic device displays an interface of a first application; the first electronic device invokes a second application of an associated second electronic device in response to an operation on the first application, and establishes a first association relationship between the first application and the second application, where the first association relationship includes that the first application is in a foreground running state; the first electronic device updates the first association relationship to a second association relationship when the first application is switched from the foreground running state to a background running state, where the second association relationship includes that the first application is in the background running state; and the first electronic device keeps the first application alive based on the second association relationship.

According to the first aspect of this application, when the first application invokes the second application of the second electronic device, the first electronic device establishes the first association relationship between the first application and the second application. The first association relationship may be updated to the second association relationship when the first application is switched from the foreground running state to the background running state, and the first application is kept alive based on the second association relationship. Because there is the association relationship between the first application and the second application of the second electronic device, the first electronic device may keep the first application alive based on the association relationship. Therefore, even if the first application is switched to the background running state, the first application is not cleared by a system in a background, and subsequently the first application can be directly switched from the background running state to the foreground running state.

According to some embodiments of this application, before the first electronic device invokes a second application of an associated second electronic device in response to an operation on the first application, the method further includes: The first electronic device manages and controls the first application in a first management and control manner. Before the first electronic device updates the first association relationship to a second association relationship when the first application is switched from the foreground running state to a background running state, the method further includes: The first electronic device manages and controls the first application in a second management and control manner, where a management and control degree of the second management and control manner on a resource is less than a management and control degree of the first management and control manner on the resource. In this application, after the first application of the first electronic device invokes the second application of the second electronic device, and before the first application is switched from the foreground running state to the background running state, the second management and control manner is used. The management and control degree of the second management and control manner is less than the management and control degree of the first management and control manner used before the first application invokes the second application. In this way, in a distributed scenario, sufficient resources can be provided for the first application running in a foreground in a distributed manner, so that a running speed of the first application can be increased, freezing of the first application when a plurality of applications run at the same time can be avoided, and performance experience of the user is improved.

According to some embodiments of this application, that the first electronic device keeps the first application alive based on the second association relationship includes: When the second application is in the foreground running state, the first electronic device keeps the first application alive in a third management and control manner, where a management and control degree of the third management and control manner on the resource is greater than the management and control degree of the first management and control manner on the resource. In this application, in the distributed scenario, when the first application is in the background running state and the second application is in the foreground running state, the first application is kept alive in the third management and control manner whose management and control degree is greater than that of the first management and control manner, so that the first application can be kept alive without occupying a large quantity of resources.

According to some embodiments of this application, that the first electronic device keeps the first application alive based on the second association relationship further includes: When the second application is in the background running state, the first electronic device keeps the first application alive in a fourth management and control manner, where a management and control degree of the fourth management and control manner on the resource is greater than the management and control degree of the third management and control manner on the resource. In this application, in the distributed scenario, when the first application is in the background running state and the second application is in the background running state, the first application is kept alive in the fourth management and control manner whose management and control degree is greater than that of the third management and control manner, so that the first application can be kept alive while occupying a small quantity of resources, thereby avoiding freezing of another application when the first application occupies a large quantity of resources.

According to some embodiments of this application, the method further includes: When the first electronic device receives a message that is sent by the second electronic device and that indicates that the second application ends, or when the first electronic device detects that the second electronic device is offline, the first electronic device deletes the second association relationship, and manages and controls the first application in a fifth management and control manner, where a management and control degree of the fifth management and control manner on the resource is greater than the management and control degree of the fourth management and control manner on the resource. In this application, in the distributed scenario, when the first application is in the background running state, and the second application ends or the second electronic device is offline, the second association relationship is deleted, so that the first application exits the distributed scenario and is in a common background running scenario, thereby occupying fewer resources.

According to some embodiments of this application, the managing and controlling the first application in a second management and control manner includes: increasing a priority of a process of the first application; or locking a priority; or increasing a frequency of at least one of a central processing unit, a graphics processing unit, or a double data rate synchronous dynamic random access memory to process the first application. In this application, the priority of the process of the first application is increased, or the priority is locked, or the frequency of at least one of the central processing unit, the graphics processing unit, or the double data rate synchronous dynamic random access memory is increased to process the first application, or the like, so that sufficient resources can be provided for the first application running in the foreground in the distributed manner.

According to some embodiments of this application, the keeping the first application alive in a third management and control manner includes: increasing a priority of a process of the first application; or placing a process of the first application at an end of a killable process list. In this application, in the distributed scenario, when the second application is in the foreground running state, the priority of the process of the first application is increased, or the process of the first application is placed at the end of the killable process list, so that the first application in the background running state can be kept alive without occupying a large quantity of resources.

According to some embodiments of this application, the keeping the first application alive in a fourth management and control manner includes: keeping the first application alive within a preset time. In this application, in the distributed scenario, when the second application is in the background running state, the first application is kept alive within the preset time, so that the first application in the background running state can be kept alive within the preset time, thereby avoiding freezing of another application when the first application occupies a large quantity of resources.

According to some embodiments of this application, the managing and controlling the first application in a fifth management and control manner includes: decreasing a priority of a process of the first application; or freezing the first application when system memory is less than a preset memory value; or clearing the first application when system memory is less than a preset memory value. In this application, when the first application in the background running state exits the distributed scenario, the priority of the process of the first application is decreased, or the first application is frozen when the system memory is less than the preset memory value, or the first application is cleared when the system memory is less than the preset memory value, thereby avoiding a resource waste.

According to some embodiments of this application, the method further includes: The first electronic device deletes the second association relationship when the first electronic device detects, through listening, that the first application ends. In this application, when the first application ends, the first electronic device deletes the second association relationship, so that when the first application is started again subsequently, the first electronic device directly manages and controls the first application in a common manner.

According to some embodiments of this application, the establishing a first association relationship between the first application and the second application includes: receiving an invocation result sent by the second electronic device; and establishing the first association relationship between the first application and the second application based on the result. In this application, the first electronic device establishes the first association relationship based on the invocation result sent by the second electronic device, so that the first association relationship can be established.

According to a second aspect, an embodiment of this application provides an electronic device, where the electronic device includes a processor and a memory, the memory is configured to store program instructions, and when the processor invokes the stored instructions, the method according to any one of the foregoing possible embodiments of the first aspect is implemented.

According to a third aspect, an embodiment of this application provides a computer-readable storage medium, where the computer-readable storage medium stores a program, and the program enables an electronic device to implement the method according to any one of the foregoing possible embodiments of the first aspect.

According to a fourth aspect, an embodiment of this application provides a computer program product, where the computer program product includes computer-executable instructions, and the computer-executable instructions are stored in a computer-readable storage medium. At least one processor of the electronic device may read the computer-executable instructions from the computer-readable storage medium, and the at least one processor executes the computer-executable instructions, so that the electronic device performs the method according to any one of the foregoing possible embodiments of the first aspect.

For beneficial effects of the second aspect to the fourth aspect and the implementations of the second aspect to the fourth aspect in this application, refer to the first aspect and the implementations of the first aspect, and beneficial effect analysis in the first aspect. Details are not described herein again.

### BRIEF DESCRIPTION OF DRAWINGS

FIG. 1 is a diagram of a resource management and control system according to an embodiment of this application;
FIG. 2 is a diagram of an entity structure of a first electronic device according to an embodiment of this application;
FIG. 3 is a diagram of composition of software architectures of a first electronic device and a second electronic device according to an embodiment of this application;
FIG. 4 is a diagram of composition of software architectures of a first electronic device and a second electronic device according to an embodiment of this application, and shows a working process in which a first application of the first electronic device invokes a second application of the second electronic device;
FIG. 5 is a diagram of composition of software architectures of a first electronic device and a second electronic device according to an embodiment of this application, and shows a working process in which a first application of the first electronic device is switched from a foreground running state to a background running state;
FIG. 6 is a diagram of composition of software architectures of a first electronic device and a second electronic device according to an embodiment of this application, and shows a working process in which a first application of the first electronic device ends;
FIG. 7 is a diagram of composition of software architectures of a first electronic device and a second electronic device according to an embodiment of this application, and shows a working process in which the second electronic device goes offline;
FIG. 8 is a diagram of a function module of a first distributed management and control unit according to an embodiment of this application;
FIG. 9 to FIG. 12 each are a flowchart of a resource management and control method according to an embodiment of this application;
FIG. 13 is a diagram of a distributed gaming scenario according to an embodiment of this application;
FIG. 14 is a diagram of a distributed computing scenario according to an embodiment of this application; and
FIG. 15 is a flowchart of another resource management and control method according to an embodiment of this application.

### DESCRIPTION OF EMBODIMENTS

In descriptions of embodiments of this application, the word "for example" and the like are used to represent giving an example, an illustration, or a description. Any embodiment or design solution described as "for example" in embodiments of this application should not be explained as being more preferred or having more advantages than another embodiment or design solution. Exactly, use of the word "for example" or the like is intended to present a related concept in a specific manner.

Unless otherwise defined, all technical and scientific terms used in this specification have same meanings as those usually understood by a person skilled in the art of this application. Terms used in the specification of this application are merely for the purpose of describing specific embodiments, but are not intended to limit this application. It should be understood that in this application, unless otherwise specified, "a plurality of" means two or more.

An existing electronic device may perform management and control based on a whitelist or an application type. When management and control is performed based on the whitelist, an application whitelist may be stored in a system of the electronic device. The application whitelist is a list of applications that are allowed to run in a background. Therefore, an application in the application whitelist is not cleared when the application is in a background running state, and an application that is not in the application whitelist is cleared when the application is in the background running state. When management and control is performed based on the application type, the electronic device may classify applications in the electronic device into a plurality of classes of applications based on application types, for example, into an instant messaging class of applications, a payment class of applications, a video class of applications, and a sports class of applications. The instant messaging class of applications may include applications such as QQ^{®} and WeChat^{®}. The payment class of applications may include applications such as Alipay^{®} and Wallet. The video class of applications may include applications such as Huawei Video and Tencent Video^{®}. The sports class of applications may include applications such as Sports and Health. The electronic device may further sort the plurality of classes of applications based on an importance and the like. For example, the instant messaging class of applications has a highest importance, and may be placed at an end of a killable process list during sorting. In this way, when the system of the electronic device clears a background application, the instant messaging class of applications may be cleared at last. However, due to an application installation or uninstallation problem, the applications in the electronic device may change anytime and anywhere. The whitelist of the system and sorting of the applications in the electronic device depend on system upgrade, and therefore cannot be updated in real time. Consequently, an application may be incorrectly cleared when running in the background.

An existing electronic device may further predict a current behavior of a user based on a habit of the user, and perform resource management and control on an application based on prediction. For example, if the electronic device detects that the user uses an address book at 5:30 p.m. for two consecutive weeks, the electronic device may establish a model based on detected information, and predict, based on the model, that the user is to use the address book at 5:30 p.m. on a current day. In this case, the electronic device automatically switches the address book to be in a foreground, or keeps the address book running in a background alive. However, because resource management and control is performed on the application based on prediction, when the behavior of the user is not regular, the electronic device cannot predict a current behavior of the user, and therefore cannot appropriately manage and control a resource of the application. Consequently, the application may be incorrectly cleared when running in the background.

In view of this, embodiments of this application provide a resource management and control method, to avoid a case in which a distributed application is cleared when running in a background in a distributed scenario.

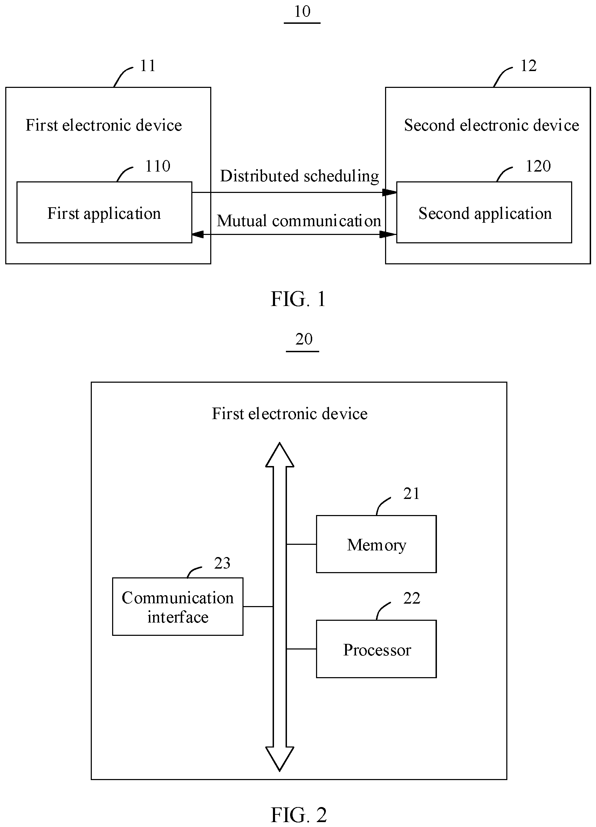

FIG. 1 is a diagram of a resource management and control system according to an embodiment of this application. A resource management and control system 10 may include a first electronic device 11 and a second electronic device 12, but is not limited thereto. In some other embodiments, the resource management and control system 10 may further include a third electronic device and the like. This is not limited in this application.

The first electronic device 11 may be a device like a mobile phone, a tablet computer, a digital camera, a personal digital assistant (personal digital assistant, PDA), a wearable device, or a laptop computer (laptop). The second electronic device 12 may be a device like a mobile phone, a tablet computer, a digital camera, a personal digital assistant (personal digital assistant, PDA), a laptop computer (laptop), a smart television, a large screen, a smart screen, or a display. FIG. 1 shows only one first electronic device 11. However, it may be understood that there may be a plurality of first electronic devices 11. This is not limited in this application.

A first application 110 is installed in the first electronic device 11. A second application 120 is installed in the second electronic device 12. The first application 110 and the second application 120 each may be a game application, a computing application, or the like. The first electronic device 11 and the second electronic device 12 may perform networking, and may establish a distributed network. The distributed network may be a Mesh network, a Bluetooth network, a Wi-Fi network, or the like. This is not limited in this application.

In some embodiments, after the first electronic device 11 and the second electronic device 12 establish the distributed network, the first application 110 of the first electronic device 11 may start the second application 120 of the second electronic device 12. In this case, the second application 120 of the second electronic device 12 may be in a foreground running state or a background running state. The first electronic device 11 may establish a first association relationship between the first application 110 and the second application 120, and store the first association relationship.

When the first application 110 is switched to the background running state, the first electronic device 11 may further update the association relationship, for example, update the first association relationship to a second association relationship. The first electronic device 11 may keep the first application 110 alive based on the second association relationship.

It may be understood that after the first application 110 of the first electronic device 11 starts the second application 120 of the second electronic device 12, the first application 110 of the first electronic device 11 and the second application 120 of the second electronic device 12 may communicate with each other. This is not limited in this application.

FIG. 2 is a diagram of an entity structure of a first electronic device according to an embodiment of this application. The first electronic device 20 may be a device like a mobile phone, a tablet computer, a digital camera, a personal digital assistant (personal digital assistant, PDA), a wearable device, or a laptop computer (laptop).

The first electronic device 20 may include a memory 21, a processor 22, and a communication interface 23. It may be understood that the structure shown in FIG. 2 does not constitute a limitation on the first electronic device 20. The first electronic device 20 may include more or fewer components than those shown in the figure, or combine some components, or split some components, or have different component arrangements.

The memory 21 may be configured to store a software program and/or a module/unit. The processor 22 implements various functions of the first electronic device 20 by running or executing the software program and/or the module/unit stored in the memory 21 and invoking data stored in the memory 21. The memory 21 may mainly include a program storage area and a data storage area. The program storage area may store an operating system, an application required by at least one function (for example, a sound playing function and an image playing function), and the like. The data storage area may store data (for example, audio data) and the like created according to use of the first electronic device 20. In addition, the memory 21 may include a non-volatile computer-readable memory, for example, a hard disk, a memory, a plug-in hard disk, a smart media card (Smart Media Card, SMC), a secure digital (Secure Digital, SD) card, a flash memory card (Flash Card), at least one magnetic disk storage device, a flash memory device, or another non-volatile solid-state storage device.

The processor 22 may be a central processing unit (Central Processing Unit, CPU), and may alternatively be another general purpose processor, a digital signal processor (Digital Signal Processor, DSP), an application specific integrated circuit (Application Specific Integrated Circuit, ASIC), a field-programmable gate array (Field-Programmable Gate Array, FPGA), or another programmable logic component, a discrete gate, a transistor logic device, a discrete hardware component, or the like. The processor 22 may be a microprocessor, or the processor 22 may be any conventional processor, or the like. The processor 22 is a control center of the first electronic device 20, and is connected to all parts of the entire first electronic device 20 through various interfaces and lines.

A memory 21 may be further disposed in the processor 22, and is configured to store instructions and data. In some embodiments, the memory 21 in the processor 22 is a cache. The memory 21 can store instructions or data that has been used or cyclically used by the processor 22. If the processor 22 needs to use the instructions or the data again, the processor 22 may directly invoke the instructions or the data from the memory 21. This avoids repeated access, reduces waiting time of the processor 22, and improves system efficiency.

In some embodiments, the processor 22 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The communication interface 23 may include a standard wired interface, a standard wireless interface, and the like. The communication interface 23 is used for the first electronic device 20 to communicate with a second electronic device.

For better understanding of embodiments of this application, some terms and concepts in this application are first described in the following.

Application status: The application status includes a non-running state and a running state. If an application is in the non-running state, the application exits running.

Running status: The running status of an application in an operating system may be classified into a foreground running state and a background running state. The foreground running state indicates that the application directly runs on a display window or an interface of a display, presents a current running interface of the application, and can interact with a user of a terminal device on the displayed interface. The background running state indicates that the display does not display the running interface of the application, but the application continues to provide a service in a background. An application having a visible display interface may be switched from the background running state to the foreground running state, or may be switched from the foreground running state to the background running state. An application having no visible display interface may be in the background running state, and generally cannot be switched to the foreground running state.

Application identifier: The application identifier may also be referred to as a user identification (user identification, UID) or an application identifier, and is an identification allocated by a system to an application in an application installation process. A plurality of applications may share one application identifier.

Process identifier: The process identifier may be referred to as a process identification (process identification, PID) or a process name, and the PID is an identity allocated by an operating system to a process of an application after the application runs. After the application stops running, the operating system reclaims the PID. When the application starts running again, the operating system reallocates a new PID. A process identification uniquely identifies a process.

Package name (package name): The package name is used by a system to identify an application. A plurality of applications may share one package name.

Distributed network: The distributed network is a type of wireless local area network, namely, a mesh network. Every two electronic devices in the distributed network may communicate with each other.

Binder system: The Binder system is a server/client mode, and includes a Binder server, a Binder client, a Binder proxy object (BpBinder), and a Binder driver.

Binder server: The Binder server provides a related service for a Binder client. The Binder server is in user space.

Binder client: The Binder client is a service object of a Binder server. The Binder client is in user space.

Binder proxy object: The Binder proxy object is a Binder interface and can listen to ending of a referenced Binder server. The Binder proxy object may register with a Binder driver a death notification (Death Notification) of a Binder server referenced by the Binder proxy object. Before the Binder proxy object registers with the Binder driver the death notification of the Binder server referenced by the Binder proxy object, the Binder proxy object may first define a death recipient (Death Recipient).

Binder driver: The Binder driver is in kernel space. When a Binder proxy object detects that a referenced Binder server ends, the Binder driver may send a death notification of the Binder server to a death recipient.

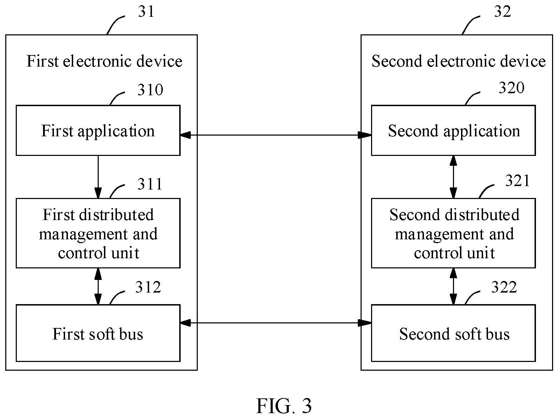

FIG. 3 is a diagram of composition of software architectures of a first electronic device and a second electronic device according to an embodiment of this application. A first electronic device 31 includes a first application 310, a first distributed management and control unit 311, and a first soft bus 312. A second electronic device 32 includes a second application 320, a second distributed management and control unit 321, and a second soft bus 322.

The first application 310 and the second application 320 may be determined based on an actual application requirement. This is not limited herein. For example, the first application 310 and the second application 320 each may be a game APP, a computing APP, or the like. The first application 310 may be a game application A1, and the second application 320 may be a game application A2; or the first application 310 may be a computing application C1, and the second application 320 may be a computing application C2.

The first distributed management and control unit 311 and the second distributed management and control unit 321 may implement cross-device application invocation and starting. The first distributed management and control unit 311 may further manage and control a resource used by the first application 310. The second distributed management and control unit 321 may further manage and control a resource used by the second application 320. The resource may include a memory resource and a computing resource. The memory resource may include a random access memory (random access memory, RAM) resource and the like. The computing resource may include a processor resource and the like.

The first soft bus 312 and the second soft bus 322 may provide functions such as cross-device communication, device online monitoring, and device offline monitoring.

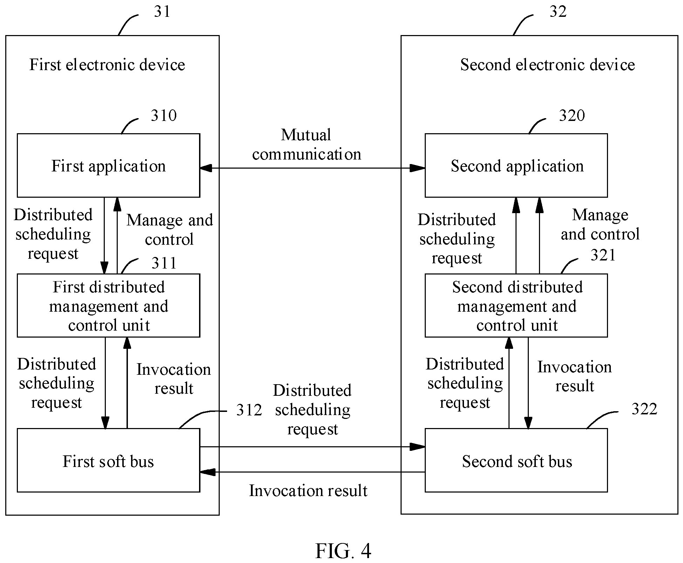

In some embodiments, as shown in FIG. 4, when the first application 310 of the first electronic device 31 initiates distributed scheduling on the second application 320 of the second electronic device 32, a distributed scheduling request output by the first application 310 may be transferred to the second electronic device 32 through the first distributed management and control unit 311 and the first soft bus 312, for example, transferred to the second soft bus 322 of the second electronic device 32. The second soft bus 322 may transfer the distributed scheduling request to the second application 320 through the second distributed management and control unit 321, so that the second application 320 can respond to the distributed scheduling initiated by the first application 310. In this way, the first application 310 of the first electronic device 31 can invoke the second application 320 of the second electronic device 32.

In some embodiments, invocation may include starting. In this case, invocation may include invocation performed when the second application is in a running state and starting performed when the second application is in a non-running state.

In some embodiments, the first application 310 of the first electronic device 31 is in a foreground running state, and the second application 320 of the second electronic device 32 may be in the foreground running state or a background running state. When the first application 310 invokes the second application 320, the second application 320 may communicate with the first application 310. The second distributed management and control unit 321 returns an invocation result to the first electronic device 31 through the second soft bus 322, for example, returns the invocation result to the first soft bus 312 of the first electronic device 31. The first soft bus 312 sends the result to the first distributed management and control unit 311. The first distributed management and control unit 311 further establishes a first association relationship between the first application 310 and the second application 320 based on the result. In some embodiments, the second distributed management and control unit 321 further establishes a third association relationship between the first application 310 and the second application 320 based on the result. The third association relationship includes basic information of the applications, running status information of the applications, a device ID of the electronic device, and the like.

In some embodiments, when the second application 320 is in the foreground running state, the first distributed management and control unit 311 and the second distributed management and control unit 321 may respectively manage and control the resource used by the first application 310 based on the first association relationship and manage and control the resource used by the second application 320 based on the third association relationship. In some embodiments, before the first application 310 initiates distributed scheduling on the second application 320 of the second electronic device 32, the first distributed management and control unit 311 may manage and control the first application 310 in a first management and control manner.

In some embodiments, after the first application 310 invokes the second application 320 of the second electronic device 32, the first distributed management and control unit 311 may manage and control the first application 310 in a second management and control manner.

In some embodiments, a management and control degree of the second management and control manner on the resource may be less than a management and control degree of the first management and control manner on the resource. In some other embodiments, a management and control degree of the second management and control manner on the resource may be equal to a management and control degree of the first management and control manner on the resource.

In some embodiments, when the second application 320 is in the background running state, the first distributed management and control unit 311 uses the second management and control manner on the first application 310 based on the first association relationship. The second distributed management and control unit 321 further keeps the second application 320 alive based on the third association relationship. In some embodiments, the second distributed management and control unit 321 further keeps the second application 320 alive in a third management and control manner based on the third association relationship. In some embodiments, a management and control degree of the third management and control manner on the resource may be equal to the management and control degree of the first management and control manner on the resource. In some other embodiments, a management and control degree of the third management and control manner on the resource may be greater than the management and control degree of the first management and control manner on the resource.

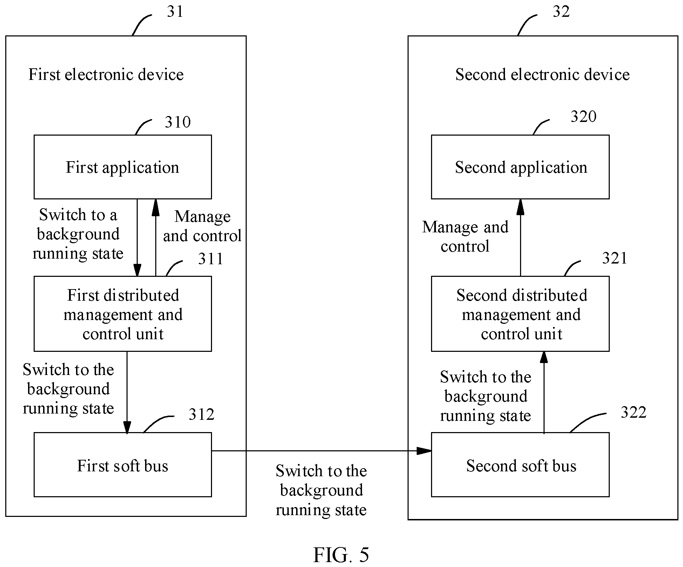

In some embodiments, as shown in FIG. 5, in a distributed scenario, when the first application 310 of the first electronic device 31 is switched from the foreground running state to the background running state, information that is output by the first application 310 and that indicates that the first application 310 is switched to the background running state may be sent to the second electronic device 32 through the first distributed management and control unit 311 and the first soft bus 312, for example, sent to the second soft bus 322 of the second electronic device 32. The second soft bus 322 may send, to the second distributed management and control unit 321, the information indicating that the first application 310 is switched to the background running state. In this case, the first distributed management and control unit 311 may update the first association relationship to a second association relationship based on the information indicating that the first application 310 is switched to the background running state, and the second distributed management and control unit 321 may update the third association relationship to a fourth association relationship based on the information indicating that the first application 310 is switched to the background running state.

In some embodiments, when the second application 320 is in the foreground running state, the first distributed management and control unit 311 keeps the first application 310 alive based on the second association relationship. In some embodiments, the first distributed management and control unit 311 keeps the first application 310 alive in the third management and control manner based on the second association relationship. The second distributed management and control unit 321 manages and controls the second application 320 in the second management and control manner based on the fourth association relationship.

In some embodiments, when the second application 320 is in the background running state, the first distributed management and control unit 311 and the second distributed management and control unit 321 may respectively keep the first application 310 alive based on the second association relationship and keep the second application 320 alive based on the fourth association relationship. In some embodiments, the first distributed management and control unit 311 and the second distributed management and control unit 321 may respectively keep the first application 310 alive in a fourth management and control manner based on the second association relationship and keep the second application 320 alive in the fourth management and control manner based on the fourth association relationship. A management and control degree of the fourth management and control manner on the resource is greater than the management and control degree of the third management and control manner on the resource.

Correspondingly, when the second application 320 is switched from the foreground running state to the background running state, the second application 320 outputs information indicating that the second application 320 is switched to the background running state. The information may be sent to the first electronic device 31 through the second distributed management and control unit 321 and the second soft bus 322, for example, sent to the first soft bus 312 of the first electronic device 31. The first soft bus 312 may send, to the first distributed management and control unit 311, the information indicating that the second application 320 is switched to the background running state. The first distributed management and control unit 311 updates the association relationship based on the information indicating that the second application 320 is switched to the background running state. The second distributed management and control unit 321 further updates the association relationship based on the information indicating that the second application 320 is switched to the background running state. When the first application 310 is in the foreground running state, the first distributed management and control unit 311 manages and controls the first application 310 in the second management and control manner based on an updated association relationship, and the second distributed management and control unit 321 keeps the second application 320 alive in the third management and control manner based on an updated association relationship. When the first application 310 is in the background running state, the first distributed management and control unit 311 and the second distributed management and control unit 321 may respectively keep the first application 310 alive in the fourth management and control manner based on the updated association relationship and keep the second application 320 alive in the fourth management and control manner based on the updated association relationship.

It may be understood that the first application 310 of the first electronic device 31 may further be switched from the background running state to the foreground running state. In this case, a management and control process of the first electronic device 31 for the first application 310 is similar to the foregoing management and control process of the first electronic device 31 for the first application 310 in FIG. 5, and a management and control process of the second electronic device 32 for the second application 320 is similar to the foregoing management and control process of the second electronic device 32 for the second application 320 in FIG. 5. Details are not described herein again.

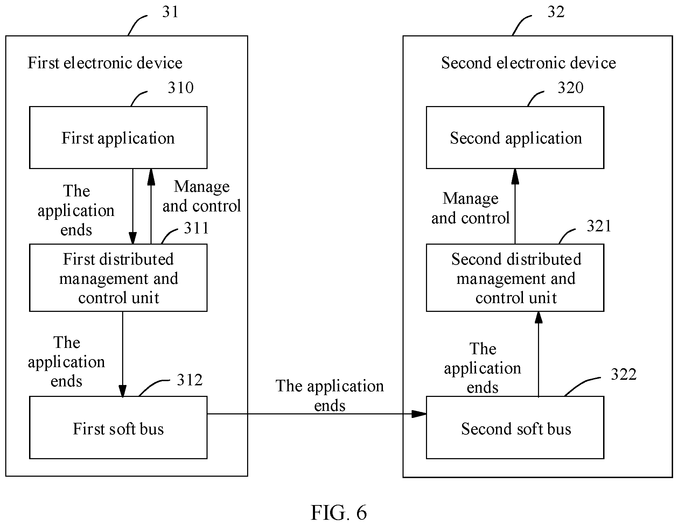

In some embodiments, as shown in FIG. 6, in a distributed scenario, when the first application 310 ends, that is, when the first application 310 is in the non-running state, the first distributed management and control unit 311 may detect, through listening, that the first application 310 ends. The first distributed management and control unit 311 may send, to the second electronic device 32 through the first soft bus 312, information indicating that the first application 310 ends, for example, send the information to the second soft bus 322 of the second electronic device 32. The second soft bus 322 may send, to the second distributed management and control unit 321, the information indicating that the first application 310 ends. The second distributed management and control unit 321 deletes the fourth association relationship based on the information indicating that the first application 310 ends. The first distributed management and control unit 311 further deletes the second association relationship based on the information indicating that the first application 310 ends. In this case, the first electronic device 31 cannot continue to control the second electronic device 32.

In some embodiments, when the first application 310 ends and the second application 320 is in the foreground running state, the second distributed management and control unit 321 manages and controls the second application 320 in the first management and control manner. When the first application 310 ends and the second application 320 is in the background running state, the second distributed management and control unit 321 manages and controls the second application 320 in a fifth management and control manner. A management and control degree of the fifth management and control manner on the resource is greater than the management and control degree of the fourth management and control manner on the resource. In some embodiments, the fifth management and control manner may be restricting an application to use a resource. It may be understood that if the first electronic device 31 starts the first application 310 again subsequently, the first distributed management and control unit 311 first manages and controls the first application 310 in the first management and control manner. This is not limited in this application.

It may be understood that in the distributed scenario, the second application 320 may alternatively end. In this case, a management and control process of the first electronic device 31 for the first application 310 is similar to the foregoing management and control process of the second electronic device 32 for the second application 320 in FIG. 6, and a management and control process of the second electronic device 32 for the second application 320 is similar to the foregoing management and control process of the first electronic device 31 for the first application 310 in FIG. 6. Details are not described herein again.

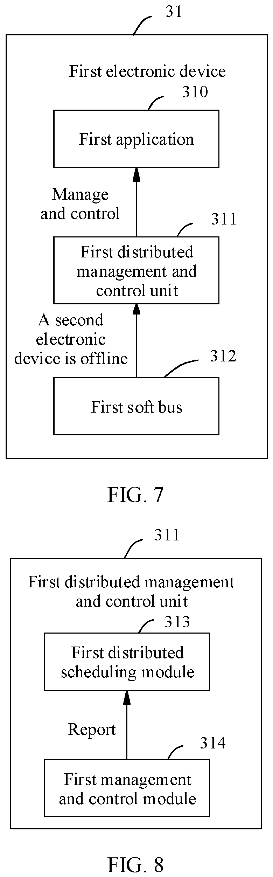

In some embodiments, as shown in FIG. 7, in the distributed scenario, when detecting that the second electronic device 32 is offline, the first soft bus 312 outputs, to the first distributed management and control unit 311, information indicating that the second electronic device 32 is offline, and the first distributed management and control unit 311 deletes an association relationship related to the second electronic device 32 based on the information indicating that the second electronic device 32 is offline. The first distributed management and control unit 311 further manages and controls the first application 310 in the first management and control manner when the first application 310 is in the foreground running state. The first distributed management and control unit 311 further manages and controls the first application 310 in the fifth management and control manner when the first application 310 is in the background running state.

In some embodiments, in the distributed scenario, when the second electronic device 32 goes offline, all association relationships related to the second electronic device 32 are deleted. This is not limited in this application.

It may be understood that in the distributed scenario, the second soft bus 322 may alternatively detect that the first electronic device 31 is offline. In this case, a management and control process of the second electronic device for the second application is similar to a management and control process of the first electronic device for the first application. Details are not described herein again. It may be understood that in the distributed scenario, when the first electronic device 31 goes offline, all association relationships related to the first electronic device 32 are deleted. This is not limited in this application.

Refer to FIG. 8. The first distributed management and control unit 311 may include a first distributed scheduling module 313 and a first management and control module 314. The first distributed scheduling module 313 is configured to implement cross-device invocation and starting of an application, and report information to the first management and control module 314. The first management and control module 314 is configured to manage and control a resource used by the first application 310. In different systems, the first management and control module 314 may be different. For example, in an Android^{®} system, the first management and control module 314 may be an AMS (Activity Manager Service). The AMS, namely, the activity manager service, is a key system service on an Android platform. In a HarmonyOS system, the first management and control module 314 may be an iAware module. iAware is a detection program for security protection.

The first application 310 of the first electronic device 31 sends the distributed scheduling request or information to the second electronic device 32 through the first distributed scheduling module 313. The information may be information about switching between the foreground running state and the background running state of the first application 310, or information indicating that the first application 310 ends.

The first electronic device 31 manages and controls, by using the first management and control module 314, the resource used by the first application 310. For example, the first application 310 is managed and controlled in the first management and control manner, the first application 310 is managed and controlled in the second management and control manner, the first application 310 is kept alive in the third management and control manner, the first application 310 is kept alive in the fourth management and control manner, or the first application 310 is managed and controlled in the fifth management and control manner.

The first electronic device 31 receives the invocation result through the first distributed scheduling module 313, and reports the invocation result to the first management and control module 314 based on the invocation result. The first electronic device 31 establishes the first association relationship by using the first management and control module 314 based on the reported invocation result.

The first electronic device 31 reports, to the first management and control module 314 through the first distributed scheduling module 313, the information indicating that the first application 310 is switched to the background running state. The first electronic device 31 updates the first association relationship to the second association relationship by using the first management and control module 314 based on the reported information indicating that the first application 310 is switched to the background running state.

The first electronic device 31 reports, to the first management and control module 314 through the first distributed scheduling module 313, the information indicating that the first application 310 ends. The first electronic device 31 deletes the second association relationship by using the first management and control module 314 based on the reported information indicating that the first application 310 ends.

The first electronic device 31 reports, to the first management and control module 314 through the first distributed scheduling module 313, the information indicating that the second electronic device 32 is offline. The first electronic device 31 deletes, by using the first management and control module 314 based on the reported information indicating that the second electronic device 32 is offline, the association relationship related to the second electronic device 32.

It may be understood that the first application 310 may be alternatively switched from the background running state to the foreground running state. This is not limited in this application.

It may be understood that the second distributed management and control unit 312 may include a second distributed scheduling module and a second management and control module. This is not limited in this application.

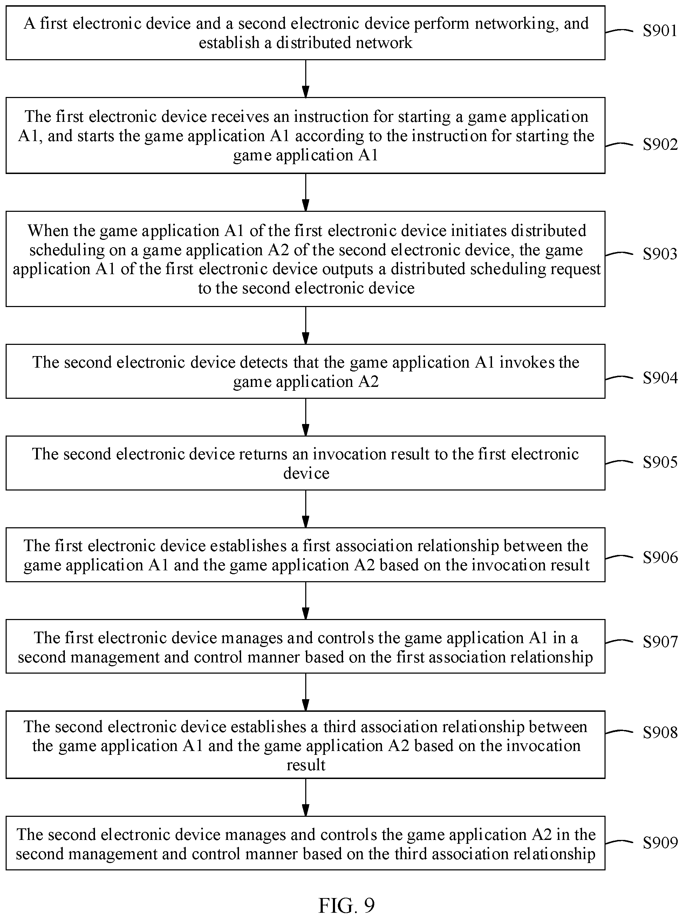

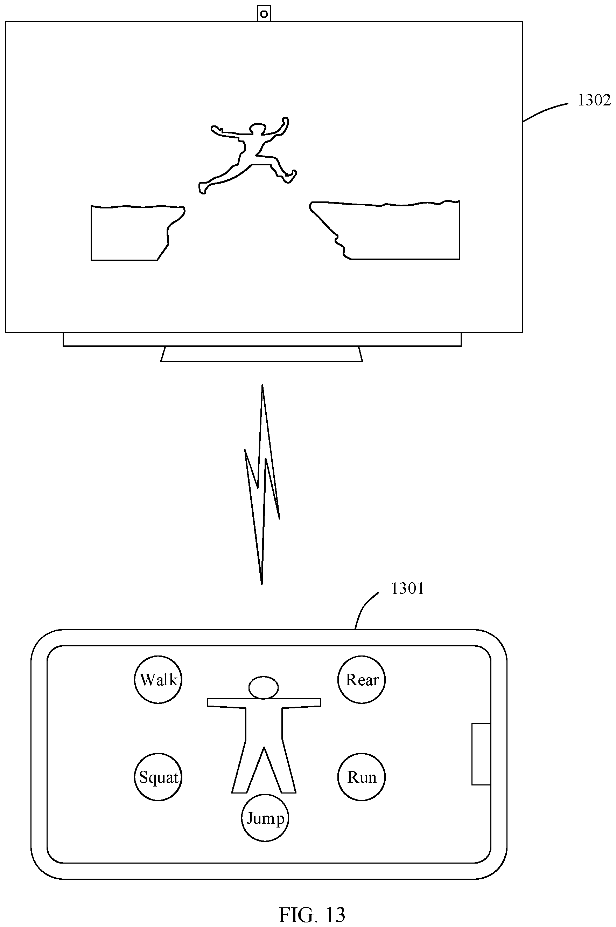

FIG. 9 to FIG. 12 each are a flowchart of a resource management and control manner according to an embodiment of this application. The resource management and control method may be applied to a distributed game scenario. In the distributed game scenario, as shown in FIG. 13, a first electronic device 1301 may be a mobile phone, and a second electronic device 1302 may be a large-screen device like a display or a television. A first application installed in the first electronic device 1301 and a second application installed in the second electronic device 1302 each may be a game application. For example, a game application A1 is installed in the first electronic device 1301, and a game application A2 is installed in the second electronic device 1302. The game application A1 of the first electronic device 1301 may invoke the game application A2 of the second electronic device 1302, and may communicate with the game application A2 of the second electronic device 1302. Therefore, the first electronic device 1301 may be virtualized as a controller by using the game application A1 to control the game application A2 of the second electronic device 1302. It may be understood that FIG. 13 is an example of the distributed game scenario, and there may be another quantity of first electronic devices 1301, for example, there are two first electronic devices 1301. Interfaces displayed by the first electronic device 1301 and the second electronic device 1302 may alternatively be other interfaces. This is not limited in this application.

The resource management and control method may include the following steps.

S901: A first electronic device and a second electronic device perform networking, and establish a distributed network.

In some embodiments, the first electronic device may perform networking with the second electronic device by scanning a two-dimensional code on the second electronic device. The distributed network may be a Mesh network, a Bluetooth network, a Wi-Fi network, or the like. This is not limited in this application. It may be understood that the first electronic device and the second electronic device may alternatively perform networking in another manner. This is not limited in this application.

In some embodiments, when the first electronic device and the second electronic device are successfully networked, a soft bus of the first electronic device and a soft bus of the second electronic device may respectively allocate corresponding device IDs to the first electronic device and the second electronic device according to a preset device ID generation rule. In some embodiments, after the first electronic device and the second electronic device are successfully networked, the second electronic device sends an online message to the first electronic device. The online message includes the device ID of the second electronic device.

S902: The first electronic device receives an instruction for starting a game application A1, and starts the game application A1 according to the instruction for starting the game application A1.

When a user wants to play a game on the second electronic device by using the first electronic device, the user may operate an application icon that is of the game application A1 and that is displayed on the first electronic device, to generate the instruction for starting the game application A1. In response to the instruction for starting the game application A1, the first electronic device starts the game application A1, and displays an interface of the game application A1. Usually, an application having a visible display interface may have a corresponding application icon, and an application having no visible display interface does not have a corresponding application icon.

In some embodiments, after starting the game application A1, the first electronic device may manage and control the game application A1 in a first management and control manner. The first management and control manner is a common foreground management and control manner.

After the foregoing networking is successful and the game application A1 is started, the following described management and control may be performed on a resource when the game application A1 invokes the game application A2.

S903: When the game application A1 of the first electronic device initiates distributed scheduling on the game application A2 of the second electronic device, the game application A1 of the first electronic device outputs a distributed scheduling request to the second electronic device.

In some embodiments, when the user wants to control the game application A2 of the second electronic device by using the game application A1 of the first electronic device, the user may operate a scheduling function in the interface that is of the game application A1 in a foreground running state and that is displayed on the first electronic device. In response to the operation on the scheduling function, the game application A1 of the first electronic device initiates distributed scheduling on the game application A2 of the second electronic device. The distributed scheduling request includes the device ID of the first electronic device and the device ID of the second electronic device. This is not limited in this application. In some embodiments, the game application A1 of the first electronic device may transfer the distributed scheduling request to a second soft bus of the second electronic device through a first distributed scheduling module and a first soft bus. The second soft bus of the second electronic device may transfer the distributed scheduling request to the game application A2 through a second distributed scheduling module, so that the game application A2 may respond to or not respond to distributed scheduling initiated by the game application A1, and then the game application A1 may invoke or not invoke the game application A2.

In some embodiments, when transferring the distributed scheduling request, the first distributed scheduling module may further serialize the distributed scheduling request, and then send a serialized distributed scheduling request to the first soft bus. A process of serializing the distributed scheduling request may be a process of converting status information of the distributed scheduling request into a form that can be stored or transmitted. During serialization of the distributed scheduling request, a current status of the distributed scheduling request may be written into a temporary or persistent storage area. Then, the distributed scheduling request may be recreated by reading from the storage area or deserializing the status of the object.

In some embodiments, when transferring the distributed scheduling request, the second distributed scheduling module may parse the serialized distributed scheduling request, and then send a distributed scheduling request obtained through parsing to the game application A2. Parsing the serialized distributed scheduling request is a deserialization process, so that the distributed scheduling request may be recreated.

S904: The second electronic device detects that the game application A1 invokes the game application A2.

In some embodiments, the second distributed scheduling module of the second electronic device detects, based on a distributed scheduling return value, whether the game application A1 invokes the game application A2. For example, when the distributed scheduling return value is OK, the second distributed scheduling module detects that the game application A1 invokes the game application A2; otherwise, the second distributed scheduling module detects that the game application A1 does not invoke the game application A2.

In some embodiments, when the game application A1 does not invoke the game application A2, a procedure ends. This is not limited in this application.

S905: The second electronic device returns an invocation result to the first electronic device.

In some embodiments, the second distributed scheduling module of the second electronic device returns the invocation result to the first soft bus of the first electronic device through the second soft bus. The first soft bus of the first electronic device transfers the invocation result to a first management and control module through the first distributed scheduling module.

In some embodiments, the invocation result includes basic information of the game application A1, running status information (status) of the game application A1, the device ID (device ID) of the first electronic device, basic information of the game application A2, running status information of the game application A2, the device ID of the second electronic device, and the like. This is not limited in this application.

In some embodiments, the basic information may be a package name, an application identification (UID), and a process identification (PID). This is not limited in this application. The basic information can uniquely identify a running application. The running status information may be a foreground running state or a background running state. In some embodiments, when the game application A1 invokes the game application A2, the running status information of the game application A1 is the foreground running state, and the running status information of the game application A2 is the foreground running state.

In some embodiments, the second soft bus sends the invocation result to the first soft bus of the first electronic device through the distributed network.

In some embodiments, before returning the invocation result to the first soft bus of the first electronic device, the second distributed scheduling module further serializes the invocation result. In this way, after receiving a serialized invocation result, the first distributed scheduling module further parses the serialized invocation result, to recreate the invocation result. This is not limited in this application.

S906: The first electronic device establishes a first association relationship between the game application A1 and the game application A2 based on the invocation result.

In some embodiments, the first management and control module of the first electronic device establishes the first association relationship between the game application A1 and the game application A2 based on the invocation result.

In some embodiments, the first electronic device further stores the first association relationship. In some embodiments, the first management and control module of the first electronic device further stores the first association relationship.

In some embodiments, the first association relationship includes the basic information of the game application A1, the running status information of the game application A1, the device ID of the first electronic device, the basic information of the game application A2, the running status information of the game application A2, and the device ID of the second electronic device. For example, the basic information of the game application A1 is a package name 1, a UID 1, and a PID 1, the device ID of the first electronic device is a device ID 1, the basic information of the game application A2 is a package name 2, a UID 2, and a PID 2, and the device ID of the second electronic device is a device ID 2. In this case, the first association relationship is: the package name 1, the UID 1, the PID 1, the foreground running state, and the device ID 1; and the package name 2, the UID 2, the PID 2, the foreground running state, and the device ID 2.

S907: The first electronic device manages and controls the game application A1 in a second management and control manner based on the first association relationship.

In some embodiments, the first management and control module of the first electronic device manages and controls the game application A1 in the second management and control manner based on the first association relationship.

In some embodiments, a management and control degree of the second management and control manner on the resource may be less than a management and control degree of the first management and control manner on the resource. Managing and controlling the game application A1 in the second management and control manner may be increasing a priority of a process of the game application A1, or locking a priority, or increasing a frequency of at least one of a central processing unit (CPU), a graphics processing unit (GPU), or a double data rate synchronous dynamic random access memory (DDR) to process the game application A1, or the like. Locking the priority indicates that the process of the game application A1 preferentially obtains a lock through contention. Alternatively, managing and controlling the game application A1 in the second management and control manner may be migrating a process of the game application A1 from a first processor of the first electronic device to a second processor of the first electronic device, where a running rate of the second processor is higher than a running rate of the first processor. This is not limited in this application. Therefore, in the distributed game scenario, sufficient resources can be provided for the game application A1 that runs in a foreground in a distributed manner, so that a running speed of the game application A1 can be improved, and no freezing occurs in the game application A1 when a plurality of applications run at the same time, thereby improving performance experience of the user.

In some other embodiments, a management and control degree of the second management and control manner on the resource may be equal to a management and control degree of the first management and control manner on the resource. In this case, a resource used by the game application A1 in the foreground running state in the distributed game scenario is the same as a resource used in a non-distributed scenario.

S908: The second electronic device establishes a third association relationship between the game application A1 and the game application A2 based on the invocation result.

In some embodiments, the second distributed scheduling module of the second electronic device reports the invocation result to a second management and control module, and the second management and control module establishes the third association relationship between the game application A1 and the game application A2 based on the invocation result.

A process in which the second management and control module establishes the third association relationship between the game application A1 and the game application A2 based on the invocation result is similar to a process in which the first management and control module establishes the first association relationship between the game application A1 and the game application A2 based on the reported invocation result. Details are not described herein again.

In some embodiments, the second electronic device further stores the third association relationship. In some embodiments, the second management and control module of the second electronic device further stores the third association relationship.

S909: The second electronic device manages and controls the game application A2 in the second management and control manner based on the third association relationship.

In some embodiments, the second management and control module of the second electronic device manages and controls the game application A2 in the second management and control manner based on the third association relationship.

In some embodiments, managing and controlling the game application A2 in the second management and control manner may be increasing a priority of a process of the game application A2, or locking a priority, or increasing a frequency of at least one of a central processing unit (CPU), a graphics processing unit (GPU), or a double data rate synchronous dynamic random access memory (DDR) to process the game application A2, or the like. Locking the priority indicates that the process of the game application A2 preferentially obtains a lock through contention. Alternatively, managing and controlling the game application A2 in the second management and control manner may be migrating a process of the game application A2 from a first processor of the first electronic device to a second processor of the first electronic device, where a running rate of the second processor is higher than a running rate of the first processor. This is not limited in this application. Therefore, in the distributed game scenario, sufficient resources can be provided for the game application A2 that runs in the foreground in a distributed manner, so that a running speed of the game application A2 can be improved, and no freezing occurs in the game application A2 when a plurality of applications run at the same time, thereby improving performance experience of the user.

In some other embodiments, a resource used by the game application A2 in the foreground running state in the distributed game scenario is the same as a resource used in a non-distributed scenario.

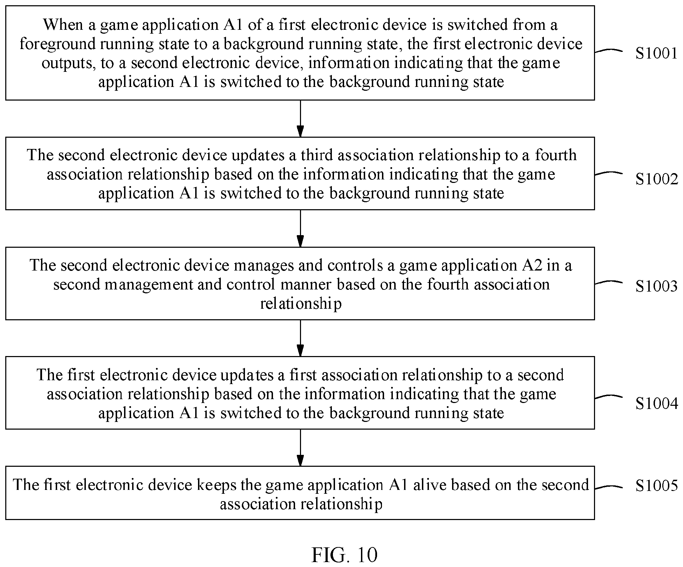

In some embodiments, when the game application A1 of the first electronic device is switched from the foreground running state to the background running state, an existing electronic device may clear the game application A1. In view of this, as shown in FIG. 10, an embodiment of this application further provides another resource management and control method, and the method may include the following steps.

S1001: When a game application A1 of a first electronic device is switched from a foreground running state to a background running state, the first electronic device outputs, to a second electronic device, information indicating that the game application A1 is switched to the background running state.

In some embodiments, when a user wants to switch the game application A1 from the foreground running state to the background running state, the user may perform a first preset operation, for example, sliding upward from a bottom edge of a display of the first electronic device in an interface of the game application A1. In response to the first preset operation, the game application A1 is switched to the background running state. It may be understood the game application A1 may alternatively be switched from the foreground running state to the background running state in another manner. This is not limited in this application.

In some embodiments, the game application A1 outputs, to a second soft bus of the second electronic device through a first distributed scheduling module and a first soft bus, the information indicating that the game application A1 is switched to the background running state. The second soft bus of the second electronic device may transfer, to a second management and control module through a second distributed scheduling module, the information indicating that the game application A1 is switched to the background running state.

In some embodiments, when transferring the information indicating that the game application A1 is switched to the background running state, the first distributed scheduling module may serialize the information indicating that the game application A1 is switched to the background running state, and then sending serialized information to the first soft bus. In some embodiments, serializing the information indicating that the game application A1 is switched to the background running state is a process of converting, into a form that can be stored or transmitted, status information of the information indicating that the game application A1 is switched to the background running state. During serialization of the information indicating that the game application A1 is switched to the background running state, a current status of the information indicating that the game application A1 is switched to the background running state may be written into a temporary or persistent storage area. Then, the information indicating that the game application A1 is switched to the background running state may be recreated by reading from the storage area or deserializing a status of the information indicating that the game application A1 is switched to the background running state.

In some embodiments, when transferring the information indicating that the game application A1 is switched to the background running state, the second distributed scheduling module may parse serialized information indicating that the game application A1 is switched to the background running state, and report, to the second management and control module, the information that indicates that the game application A1 is switched to the background running state and that is obtained through parsing. Parsing the serialized distributed scheduling request is a deserialization process, so that the information indicating that the game application A1 is switched to the background running state can be recreated.

S 1002: The second electronic device updates a third association relationship to a fourth association relationship based on the information indicating that the game application A1 is switched to the background running state.

In some embodiments, the second management and control module of the second electronic device updates the third association relationship to the fourth association relationship based on the information indicating that the game application A1 is switched to the background running state. In some embodiments, the second management and control module searches, based on the information indicating that the game application A1 is switched to the background running state, for the third association relationship that matches the game application A1, and updates, to the background running state based on the information indicating that the game application A1 is switched to the background running state, running status information of the game application A1 in the third association relationship, so that the third association relationship is updated to the fourth association relationship. In some embodiments, the second management and control module searches, by using a package name, a UID, and a PID, for the third association relationship that matches the game application A1. The foregoing example of the basic information of the game application A1 and the basic information of the game application A2 is still used. The fourth association relationship may be, for example, the package name 1, the UID 1, the PID 1, the background running state, and the device ID 1; and the package name 2, the UID 2, the PID 2, the foreground running state, and the device ID 2.

In some embodiments, the second electronic device further stores the fourth association relationship. In some embodiments, the second management and control module of the second electronic device further stores the fourth association relationship.

S1003: The second electronic device manages and controls the game application A2 in the second management and control manner based on the fourth association relationship.

In some embodiments, the second management and control module of the second electronic device manages and controls the game application A2 in the second management and control manner based on the fourth association relationship. In some embodiments, in the fourth association relationship, the game application A1 is in the background running state, and the game application A2 is in the foreground running state. In this case, there is still a distributed association relationship between the game application A1 of the first electronic device and the game application A2 of the second electronic device, and the game application A2 may be managed and controlled in the second management and control manner by the second management and control module. Therefore, sufficient resources can be provided for the game application A2 that runs in a foreground in a distributed manner, so that a running speed of the game application A2 can be improved, and no freezing occurs in the game application A2 when a plurality of applications run at the same time, thereby improving performance experience of the user.

S1004: The first electronic device updates a first association relationship to a second association relationship based on the information indicating that the game application A1 is switched to the background running state.

In some embodiments, the first distributed scheduling module of the first electronic device reports, to the first management and control module, the information indicating that the game application A1 is switched to the background running state. The first management and control module updates the first association relationship to the second association relationship based on the information indicating that the game application A1 is switched to the background running state.

It may be understood that, in the distributed game scenario, provided that the second electronic device is not offline, a data transmission channel formed between the first soft bus of the first electronic device and the second soft bus of the second electronic device is not disconnected. In this case, the information that is output by the game application A1 and that indicates that the game application A1 is switched to the background running state can be transferred to the second electronic device, and the second electronic device does not need to return a transfer result to the first distributed scheduling module of the first electronic device.

In some embodiments, a process in which the first management and control module updates the first association relationship to the second association relationship based on the information indicating that the game application A1 is switched to the background running state is similar to a process in which the second management and control module updates the third association relationship to the fourth association relationship based on the information indicating that the game application A1 is switched to the background running state. Details are not described herein again. In some embodiments, the first management and control module further stores the second association relationship.

S1005: The first electronic device keeps the game application A1 alive based on the second association relationship.

In some embodiments, the first management and control module of the first electronic device keeps the game application A1 alive based on the second association relationship. In the second association relationship, the game application A1 is in the background running state, and the game application A2 is in the foreground running state. In this case, there is still a distributed association relationship between the game application A1 of the first electronic device and the game application A2 of the second electronic device, and the game application A1 is an application that may be started by the user again. Therefore, the first management and control module may keep the game application A1 alive.

In some embodiments, the first management and control module keeps the game application A1 alive in a third management and control manner based on the second association relationship. In some embodiments, a management and control degree of the third management and control manner on a resource may be equal to a management and control degree of the first management and control manner on the resource, and the first management and control module allows the game application A1 to normally use the resource.

In some other embodiments, a management and control degree of the third management and control manner on a resource may be greater than a management and control degree of the first management and control manner on the resource. Keeping the game application A1 alive in the third management and control manner may be increasing a priority of a process of the game application A1, placing a process of the game application A1 at an end of a killable process list, or the like. In this way, when the game application A1 is in the background running state, the game application A1 can be kept alive, so that the game application A1 in the background running state is not cleared by the system. In this case, when the user needs to continue the game subsequently, the game application A1 can be directly switched from the background running state to the foreground running state, and there is no need to perform code scanning, a networking procedure, and an invocation procedure again.

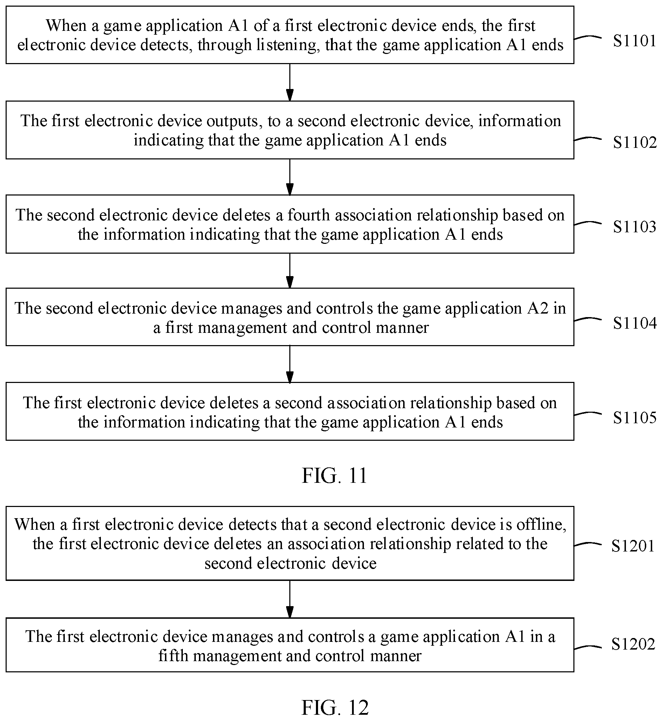

Refer to FIG. 11. In some embodiments, the resource management and control method may further include the following steps.

S1101: When the game application A1 of the first electronic device ends, the first electronic device detects, through listening, that the game application A1 ends.

In some embodiments, when the user wants to close the game application A1 running in the background, the user may perform a second preset operation, for example, sliding upward from the bottom edge of the display of the first electronic device to a middle of the display in a home screen. In response to the second preset operation, the first electronic device enters a multi-task interface. At least a task thumbnail of an application in a running state may be displayed in the multi-task interface. In the multi-task interface, the user may press and hold a task thumbnail of the game application A1 and slide up, so that the game application A1 exits running and is in a non-running state. It may be understood that the game application A1 may alternatively exit running in another manner. This is not limited in this application.

In some embodiments, the first distributed scheduling module of the first electronic device may detect, through listening, that the game application A1 ends. The first distributed scheduling module may listen to ending of the first application through a Binder object death notification mechanism. This is not limited in this application.

In some embodiments, a Binder proxy object may register with a Binder driver a death notification of the game application A1 referenced by the Binder proxy object. Before the Binder proxy object registers with the Binder driver the death notification of the game application A1 referenced by the Binder proxy object, the Binder proxy object may first define the first distributed scheduling module as a death recipient. When the Binder proxy object detects that the referenced game application A1 ends, the Binder driver may send a death notification of the game application A1 to the first distributed scheduling module. Therefore, the first distributed scheduling module can detect, through listening, that the game application A1 ends.

S1102: The first electronic device outputs, to the second electronic device, information indicating that the game application A1 ends.

In some embodiments, the first distributed scheduling module of the first electronic device transmits, to the second soft bus of the second electronic device through the first soft bus, the information indicating that the game application A1 ends. The second soft bus of the second electronic device may transfer, to the second management and control module through the second distributed scheduling module, the information indicating that the game application A1 ends.

In some embodiments, when transferring the message indicating that the game application A1 ends, the first distributed scheduling module may serialize the information indicating that the game application A1 ends, and then send the information to the first soft bus. In some embodiments, serializing the information indicating that the game application A1 ends is a process of converting the information indicating that the game application A1 ends into a form that can be stored or transmitted. During serialization of the information indicating that the game application A1 ends, a current status of the information indicating that the game application A1 ends may be written into a temporary or persistent storage area. Then, the information indicating that the game application A1 ends may be recreated by reading from the storage area or deserializing the status of the object.

In some embodiments, when transferring the distributed scheduling request, the second distributed scheduling module may parse serialized information indicating that the game application A1 ends, and then report, to the second management and control module, the information that indicates that the game application A1 ends and that is obtained through parsing. Parsing the serialized information indicating that the game application A1 ends is a deserialization process, so that the information indicating that the game application A1 ends can be recreated.

S1103: The second electronic device deletes the fourth association relationship based on the information indicating that the game application A1 ends.

In some embodiments, the second management and control module of the second electronic device deletes the fourth association relationship based on the information indicating that the game application A1 ends. In some embodiments, the second management and control module searches, based on the information indicating that the game application A1 ends, for a fourth association relationship that matches the game application A1, and deletes the fourth association relationship. In some embodiments, the second management and control module searches, by using a package name, a UID, and a PID, for the fourth association relationship that matches the game application A1.

S1104: The second electronic device manages and controls the game application A2 in the first management and control manner.

In some embodiments, the second management and control module of the second electronic device manages and controls the game application A2 in the first management and control manner. In some embodiments, if there is no fourth association relationship in the second electronic device, there is no association relationship between the game application A2 and the game application A1, and the game application A2 in the foreground running state is no longer in a distributed scenario. In this case, common resource management and control may be directly performed on the game application A2 in the foreground.

S1105: The first electronic device deletes the second association relationship based on the information indicating that the game application A1 ends.

In some embodiments, the first distributed scheduling module of the first electronic device reports, to the first management and control module, the information indicating that the game application A1 ends. The first management and control module deletes the second association relationship based on the information indicating that the game application A1 ends.

In some embodiments, the first management and control module searches, based on the information indicating that the game application A1 ends, for a second association relationship that matches the game application A1, and deletes the second association relationship. In some embodiments, the first management and control module searches, by using a package name, a UID, and a PID, for the second association relationship that matches the game application A1. In this way, there is no second association relationship in the first electronic device, and when the game application A1 is started again subsequently, the first management and control module directly manages and controls the game application A1 in the first management and control manner.

Refer to FIG. 12. In some embodiments, the resource management and control method may further include the following steps.

S1201: When the first electronic device detects that the second electronic device is offline, the first electronic device deletes an association relationship related to the second electronic device.

In some embodiments, the first electronic device may detect, by using the first soft bus of the first electronic device, that the second electronic device is offline. When the first soft bus detects that the second electronic device is offline, the first soft bus may output, to the first management and control module through the first distributed scheduling module, information indicating that the second electronic device is offline. The first management and control module deletes, based on the information indicating that the second electronic device is offline, the association relationship related to the second electronic device.

In some embodiments, the first soft bus of the first electronic device periodically sends a heartbeat packet to the second soft bus of the second electronic device. If the first soft bus does not receive reply data within a preset time, the first soft bus detects that the second electronic device is offline. It may be understood that the first soft bus may alternatively detect, in another manner, that the second electronic device is offline. This is not limited in this application.

In some embodiments, the first management and control module may search, based on the information indicating that the second electronic device is offline, for an association relationship that matches the second electronic device, and delete the association relationship that matches the second electronic device. Therefore, the first management and control module may delete the association relationship related to the second electronic device.

S 1202: The first electronic device manages and controls the game application A1 in a fifth management and control manner.

In some embodiments, the first management and control module of the first electronic device manages and controls the game application A1 in the fifth management and control manner. In some embodiments, if there is no association relationship related to the second electronic device in the first electronic device, there is no longer association relationship between the game application A2 and the game application A1, and the game application A2 in the background running state is no longer in a distributed scenario. In this case, the game application A1 may be managed and controlled in the fifth management and control manner, thereby reducing resource consumption and power consumption of the first electronic device.

In some embodiments, a management and control degree of the fifth management and control manner on the resource may be greater than the management and control degree of the third management and control manner on the resource. The fifth management and control manner may be restricting an application to use a resource. In some embodiments, managing and controlling the game application A1 in the fifth management and control manner may be decreasing a priority of the process of the game application A1, freezing the game application A1 when system memory is less than a preset memory value, clearing the game application A1 when system memory is less than a preset memory value, or the like.

It may be understood that step S907 and step S909 may be omitted. This is not limited in this application.

It may be understood that the game application A1 of the first electronic device may further be switched from the background running state to the foreground running state. In this case, a transmission process of information indicating that the game application A1 is switched to the foreground running state and an association relationship updating process are respectively similar to the foregoing steps S1001 and S 1002 and step S 1004, and a management and control process of the first management and control module and a management and control process of the second management and control module are similar to the foregoing step S907 and step S909. Details are not described herein again.

It may be understood that steps S908 and S909 may be performed before step S905, or steps S908 and S909 and step S905 may be simultaneously performed. This is not limited in this application.

It may be understood that when the game application A1 of the first electronic device is switched from the foreground running state to the background running state, steps S1004 and S1005 may be first performed, and then the first electronic device outputs, to the second electronic device, the information indicating that the game application A1 is switched to the background running state; or steps S1004 and S1005 are performed simultaneously with the first electronic device outputting, to the second electronic device, the information indicating that the game application A1 is switched to the background running state. This is not limited in this application.

It may be understood that step S1105 may be performed before step S1102, or step S1105 and step S1102 may be simultaneously performed. This is not limited in this application.

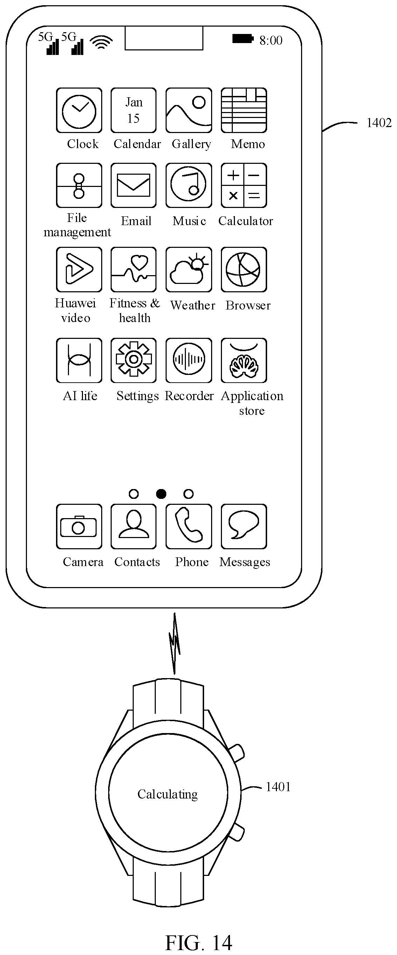

It may be understood that the resource management and control methods shown in FIG. 9 to FIG. 12 may be applied to a distributed computing scenario in addition to the distributed game scenario. In the distributed computing scenario, as shown in FIG. 14, a first electronic device 1401 may be a smartwatch, and a second electronic device 1402 may be a mobile phone. A first application installed in the first electronic device 1401 and a second application installed in the second electronic device 1402 each may be a computing application. For example, a computing application C1 is installed in the first electronic device 1401, and a computing application C2 is installed in the second electronic device 1402. The computing application C1 of the first electronic device 1401 may invoke the computing application C2 of the second electronic device 1402, and the computing application C1 of the first electronic device 1401 and the computing application C2 of the second electronic device 1402 may communicate with each other. Therefore, the first electronic device 1401 may send a computing task to the second electronic device 1402 for computing, so that a computing requirement with high energy consumption may be transferred to the second electronic device 1402 for processing. It may be understood that FIG. 14 is an example of the distributed computing scenario. Interfaces displayed by the first electronic device 1401 and the second electronic device 1402 may alternatively be other interfaces. This is not limited in this application.

The resource management and control method applied to the distributed computing scenario is similar to the resource management and control method applied to the distributed game scenario, and a difference lies in that in the distributed computing scenario, the computing application C1 invokes the computing application C2. When the computing application C1 of the first electronic device invokes the computing application C2 of the second electronic device, if the computing application C1 is in the foreground running state, and the computing application C2 is in the background running state, running status information of the computing application C1 in the first association relationship and running status information of the computing application C1 in the third association relationship are both the foreground running state, and running status information of the computing application C2 in the first association relationship and running status information of the computing application C2 in the third association relationship are both the background running state. The first management and control module of the first electronic device manages and controls the computing application C1 in the second management and control manner based on the first association relationship, and the second management and control module of the second electronic device keeps the computing application C2 alive in the third management and control manner based on the third association relationship.

When the computing application C1 is switched from the foreground running state to the background running state, running status information of the computing application C1 in the second association relationship and running status information of the computing application C1 in the fourth association relationship are both the background running state, and running status information of the computing application C2 in the second association relationship and running status information of the computing application C2 in the fourth association relationship are both the background running state. The first management and control module of the first electronic device keeps the computing application C1 alive in a fourth management and control manner based on the second association relationship, and the second management and control module of the second electronic device keeps the computing application C2 alive in the fourth management and control manner based on the fourth association relationship. A management and control degree of the fourth management and control manner on the resource may be greater than the management and control degree of the third management and control manner on the resource and less than the management and control degree of the fifth management and control manner on the resource. For example, keeping the computing application C1 alive in the fourth management and control manner may be keeping the computing application C1 alive within a predetermined time (for example, 3 minutes). To be specific, a priority of a process of the computing application C1 is increased within the predetermined time, or a process of the computing application C1 is placed at the end of the killable process list, or the like. In some embodiments, keeping the computing application C1 alive in the fourth management and control manner may alternatively be reducing a priority of a process of the computing application C1 compared with that in the third management and control manner. This is not limited in this application.

When the computing application C1 ends, the second management and control module manages and controls the computing application C2 in the fifth management and control manner. This is not limited in this application.

It may be understood that the computing application C1 of the first electronic device may further be switched from the background running state to the foreground running state. When the computing application C1 is switched to the foreground running state, the first management and control module performs resource management and control on the computing application C1 in the second management and control manner, and the second management and control module keeps the computing application C2 alive in the third management and control manner. This is not limited in this application.

It may be understood that the resource management and control methods shown in FIG. 9 to FIG. 12 may be applied to another distributed scenario. This is not limited in this application.

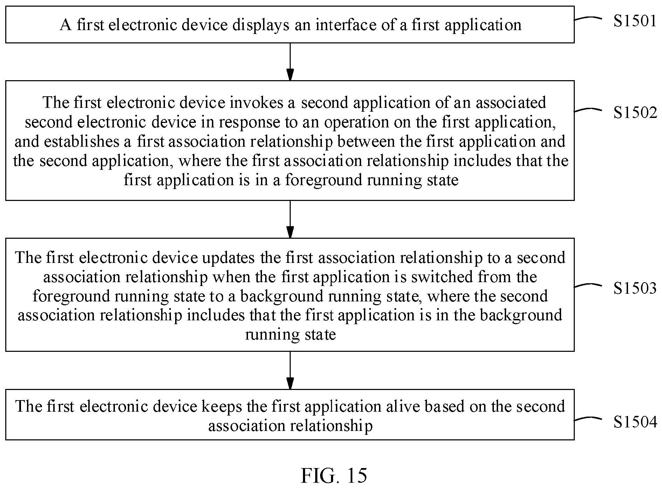

FIG. 15 is a flowchart of another resource management and control method according to an embodiment of this application. The method includes the following steps.

S1501: A first electronic device displays an interface of a first application.

S1502: The first electronic device invokes a second application of an associated second electronic device in response to an operation on the first application, and establishes a first association relationship between the first application and the second application, where the first association relationship includes that the first application is in a foreground running state.

S1503: The first electronic device updates the first association relationship to a second association relationship when the first application is switched from the foreground running state to a background running state, where the second association relationship includes that the first application is in the background running state.

S1504: The first electronic device keeps the first application alive based on the second association relationship.

In some embodiments, before the first electronic device invokes a second application of an associated second electronic device in response to an operation on the first application, the method further includes: The first electronic device manages and controls the first application in a first management and control manner. Before the first electronic device updates the first association relationship to a second association relationship when the first application is switched from the foreground running state to a background running state, the method further includes: The first electronic device manages and controls the first application in a second management and control manner. A management and control degree of the second management and control manner on a resource is less than a management and control degree of the first management and control manner on the resource.

In some embodiments, that the first electronic device keeps the first application alive based on the second association relationship includes: The first electronic device keeps the first application alive in a third management and control manner when the second application is in the foreground running state, where a management and control degree of the third management and control manner on the resource is greater than the management and control degree of the first management and control manner on the resource.

In some embodiments, that the first electronic device keeps the first application alive based on the second association relationship further includes: The first electronic device keeps the first application alive in a fourth management and control manner when the second application is in the background running state, where a management and control degree of the fourth management and control manner on the resource is greater than the management and control degree of the third management and control manner on the resource.

In some embodiments, when the first electronic device receives a message that is sent by the second electronic device and that indicates that the second application ends, or when the first electronic device detects that the second electronic device is offline, the first electronic device deletes the second association relationship, and manages and controls the first application in a fifth management and control manner. A management and control degree of the fifth management and control manner on the resource is greater than the management and control degree of the fourth management and control manner on the resource.

In some embodiments, the managing and controlling the first application in a second management and control manner includes: increasing a priority of a process of the first application; or locking a priority; or increasing a frequency of at least one of a central processing unit, a graphics processing unit, or a double data rate synchronous dynamic random access memory to process the first application.

In some embodiments, the keeping the first application alive in a third management and control manner includes: increasing the priority of the process of the first application; or placing the process of the first application at an end of a killable process list.

In some embodiments, the keeping the first application alive in a fourth management and control manner includes: keeping the first application alive within a preset time. In some embodiments, the managing and controlling the first application in a fifth management and control manner includes: decreasing a priority of a process of the first application; or freezing the first application when system memory is less than a preset memory value; or clearing the first application when system memory is less than a preset memory value.

In some embodiments, the method further includes: When the first electronic device detects, through listening, that the first application ends, the first electronic device deletes the second association relationship.

In some embodiments, the establishing a first association relationship between the first application and the second application includes: receiving an invocation result sent by the second electronic device; and establishing the first association relationship between the first application and the second application based on the result.

In addition to the foregoing method and device, an embodiment of this application further provides a computer-readable storage medium. The computer-readable storage medium stores a program, and the program enables an electronic device to implement the method shown in FIG. 15.

A computer program product is provided, where the computer program product includes computer-executable instructions, and the computer-executable instructions are stored in a computer-readable storage medium. At least one processor of an electronic device may read the computer-executable instructions from the computer-readable storage medium, and the at least one processor executes the computer-executable instructions, so that the electronic device performs the method shown in FIG. 15.

In this application, the first electronic device displays the interface of the first application, invokes the second application of the associated second electronic device in response to the operation on the first application, and establishes the first association relationship between the first application and the second application. In addition, the first electronic device updates the first association relationship to the second association relationship when the first application is switched from the foreground running state to the background running state, and keeps the first application alive based on the second association relationship. In this way, a distributed application is not cleared when running in a background in a distributed scenario.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk (SSD)), or the like.

Finally, it should be noted that the foregoing embodiments are merely intended for describing the technical solutions of this application, but not for limiting the technical solutions of this application. Although this application is described in detail with reference to the example embodiments, a person of ordinary skill in the art should understand that modifications or equivalent replacements may be made to the technical solutions of this application, without departing from the spirit and scope of the technical solutions of this application.

## Claims

1. A resource management and control method, wherein the method comprises:
displaying, by a first electronic device, an interface of a first application;
invoking, by the first electronic device, a second application of an associated second electronic device in response to an operation on the first application, and establishing a first association relationship between the first application and the second application, wherein the first association relationship comprises that the first application is in a foreground running state;
updating, by the first electronic device, the first association relationship to a second association relationship when the first application is switched from the foreground running state to a background running state, wherein the second association relationship comprises that the first application is in the background running state; and
keeping, by the first electronic device, the first application alive based on the second association relationship.

2. The method according to claim 1, wherein
before the invoking, by the first electronic device, a second application of an associated second electronic device in response to an operation on the first application, the method further comprises:
managing and controlling, by the first electronic device, the first application in a first management and control manner; and
before the updating, by the first electronic device, the first association relationship to a second association relationship when the first application is switched from the foreground running state to a background running state, the method further comprises:
managing and controlling, by the first electronic device, the first application in a second management and control manner, wherein a management and control degree of the second management and control manner on a resource is less than a management and control degree of the first management and control manner on the resource.

3. The method according to claim 2, wherein the keeping, by the first electronic device, the first application alive based on the second association relationship comprises:
when the second application is in the foreground running state, keeping, by the first electronic device, the first application alive in a third management and control manner, wherein a management and control degree of the third management and control manner on the resource is greater than the management and control degree of the first management and control manner on the resource.

4. The method according to claim 3, wherein the keeping, by the first electronic device, the first application alive based on the second association relationship further comprises:
when the second application is in the background running state, keeping, by the first electronic device, the first application alive in a fourth management and control manner, wherein a management and control degree of the fourth management and control manner on the resource is greater than the management and control degree of the third management and control manner on the resource.

5. The method according to claim 4, wherein the method further comprises:
when the first electronic device receives a message that is sent by the second electronic device and that indicates that the second application ends, or when the first electronic device detects that the second electronic device is offline, deleting, by the first electronic device, the second association relationship, and managing and controlling the first application in a fifth management and control manner, wherein a management and control degree of the fifth management and control manner on the resource is greater than the management and control degree of the fourth management and control manner on the resource.

6. The method according to any one of claims 2 to 5, wherein the managing and controlling the first application in a second management and control manner comprises:
increasing a priority of a process of the first application; or
locking a priority; or
increasing a frequency of at least one of a central processing unit, a graphics processing unit, or a double data rate synchronous dynamic random access memory to process the first application.

7. The method according to any one of claims 3 to 5, wherein the keeping the first application alive in a third management and control manner comprises:
increasing a priority of a process of the first application; or
placing a process of the first application at an end of a killable process list.

8. The method according to claim 4 or 5, wherein the keeping the first application alive in a fourth management and control manner comprises:
keeping the first application alive within a preset time.

9. The method according to claim 5, wherein the managing and controlling the first application in a fifth management and control manner comprises:
decreasing a priority of a process of the first application; or
freezing the first application when system memory is less than a preset memory value; or
clearing the first application when system memory is less than a preset memory value.

10. The method according to any one of claims 1 to 9, wherein the method further comprises:
deleting, by the first electronic device, the second association relationship when the first electronic device detects, through listening, that the first application ends.

11. The method according to any one of claims 1 to 10, wherein the establishing a first association relationship between the first application and the second application comprises:
receiving an invocation result sent by the second electronic device; and
establishing the first association relationship between the first application and the second application based on the result.

12. An electronic device, wherein the electronic device comprises a processor and a memory, the memory is configured to store program instructions, and when the processor invokes the stored instructions, the resource management and control method according to any one of claims 1 to 11 is implemented.

13. A computer-readable storage medium, wherein the computer-readable storage medium stores a program, and the program enables an electronic device to implement the resource management and control method according to any one of claims 1 to 11.

14. A computer program product, wherein the computer program product comprises computer-executable instructions, and the computer-executable instructions are stored in a computer-readable storage medium; and at least one processor of an electronic device may read the computer-executable instructions from the computer-readable storage medium, and the at least one processor executes the computer-executable instructions, so that the electronic device performs the resource management and control method according to any one of claims 1 to 11.
